# FASCICULE DE BREVET EUROPEEN

(11) **EP 0 964 226 B1**
(45) Date de publication et mention de la délivrance du brevet: **03.11.2004**
(21) Numéro de dépôt: 99401280.5
(22) Date de dépôt: 28.05.1999
(51) Int. Cl.: G01D 5/347

(54) **Dispositif de lecteur pour codeur optique haute résolution**
Ablesevorrichtung für hochauflösenden optischen Kodierer
Reader device for high resolution optical encoder

(30) Priorité: 10.06.1998 FR 9807314
(43) Date de publication de la demande: 15.12.1999
(73) Titulaire: Codechamp, 23190 Champagnat (FR)
(72) Inventeur: Gaumet, Daniel, 23190 Champagnat (FR)
(74) Mandataire: Debay, Yves

(56) Documents cités:
- WO-A-80/01416
- DE-A- 3 609 211
- GB-A- 1 198 517
- US-A- 3 983 391
- PATENT ABSTRACTS OF JAPAN vol. 9, no. 156 (P-368) [1879], 29 juin 1985 (1985-06-29) & JP 60 031016 A (MATSUSHITA DENKO K.K.), 16 février 1985 (1985-02-16)

## Description

La présente invention concerne un dispositif de lecture optique pour codeur optique haute résolution utilisé, notamment pour déterminer la position angulaire d'un objet par rapport à un autre.

Il est connu dans l'art antérieur des codeurs optiques qui permettent de mesurer la position angulaire de deux objets pouvant être en mouvement l'un par rapport à l'autre, par utilisation du principe de l'interférométrie. Dans les demandes de brevet européen EP 262 349 et EP 419 701, un tel dispositif est constitué d'un disque comprenant, sur un anneau périphérique, des graduations angulaires permettant de diffracter une première fois un rayon lumineux provenant d'une source d'émission. Après avoir été diffracté, le rayon lumineux pénètre dans un prisme qui dévie le rayon lumineux jusqu'à une unité de lecture diamétralement opposée à la source lumineuse. Avant d'atteindre l'unité de lecture, le rayon lumineux traverse une nouvelle fois le disque et est diffracté une deuxième fois par la graduation angulaire. Le rayon est également réfléchi totalement sur les faces latérales du prisme, produisant ainsi des interférences.

Il est également connu par le brevet français FR 2 666 145 un capteur optique utilisé, notamment comme capteur de vitesse ou capteur de position d'un élément déplacé en rotation ou en translation. Ce dispositif comprend un organe codeur pourvu de surfaces de réflexion de géométrie particulière et un transducteur comprenant un émetteur et un récepteur optiques. La détection de la vitesse de l'organe s'effectue par réflexion du faisceau lumineux sur les surfaces particulières de l'organe codeur. Ces surfaces sont délimitées au moins en partie par une conique, c'est-à-dire une parabole, une ellipse ou une hyperbole. Ce dispositif nécessite, pour la fabrication de l'organe codeur, une très grande précision d'usinage, engendrant des coûts importants et une fragilité accrue.

Il est également connu dans l'art antérieur, par le document DE 36 09 211, un détecteur optique de la position angulaire d'un disque de codage doté d'un prisme de forme complexe pour amener le rayon lumineux vers des photodiodes. Les interférences produites par les réflexions sur le prisme ne sont pas corrigées dans ce type de détecteur.

Les documents GB 1 198 517, WO 80 01416, US 3 983 391 et JP 60 031016 décrivent également des dispositifs à lecture optique permettant de détecter avec une précision acceptable la position d'un disque de codage. Toutefois il existe un besoin pour un appareil restant simple à réaliser tout en obtenant une haute résolution.

La présente invention a donc pour objet de pallier les inconvénients de l'art antérieur en proposant un dispositif de lecture optique pour codeur optique haute résolution de conception et de maintenance simples permettant d'améliorer la précision de la détection de la position d'un objet, sans faire appel à l'interférométrie.

Ce but est atteint par le fait que le dispositif optique d'un codeur optique haute résolution comprenant des moyens d'émission d'un faisceau lumineux, des moyens de réception de ce faisceau, un disque dont on cherche à déterminer la position angulaire, des moyens réfléchissants pour dévier vers les moyens de réception le faisceau émis par les moyens d'émission et des moyens de diffraction du faisceau disposé sur le disque du codeur, les moyens d'émission et les moyens de réception du faisceau étant situés sur un même plan parallèle au disque du codeur, le disque étant disposé, entre d'une part le plan contenant les moyens d'émission et les moyens de réception, et d'autre part les moyens réfléchissants, caractérisé en ce que les moyens de diffraction du faisceau sont du type comprenant au moins une ouverture et disposés sur la face du disque opposée au plan contenant les moyens d'émission et les moyens de réception, les moyens réfléchissants comprenant au moins deux surfaces réfléchissantes, chaque surface formant un angle déterminé avec le plan contenant les moyens d'émission et les moyens de réception, les moyens d'émission et les moyens de réception étant alignés sur rayon du disque.

Selon une autre particularité, l'angle entre les surfaces réfléchissantes et le plan contenant les moyens d'émission et les moyens de réception est de 45°.

Selon une autre particularité, les moyens d'émission et les moyens de réception sont disposés de sorte que le chemin optique du faisceau lumineux traverse au moins une fois le disque du codeur et au moins une fois les moyens de diffraction.

Selon une autre particularité, les surfaces réfléchissantes sont constituées de miroirs, et/ou de prismes, et/ou de surfaces polies de matériau.

Selon une autre particularité, au moins une surface réfléchissante est de forme déterminée non plane, choisie préférentiellement parmi les formes concaves.

Selon une autre particularité, les deux surfaces réfléchissantes sont de forme non plane, déterminées pour que le faisceau réfléchi par la deuxième surface réfléchissante en direction du récepteur, soit constitué de rayons lumineux parallèles.

Selon une autre particularité, les moyens d'émission du faisceau lumineux comprennent au moins un émetteur optique, chaque émetteur optique étant associé à un récepteur optique constituant les moyens de réception du faisceau lumineux.

Selon une autre particularité, les moyens d'émission et les moyens de réception du faisceau lumineux sont disposés de sorte qu'ils soient alignés sur une demi-droite disjointe de l'axe de symétrie du disque.

Selon une autre particularité, le faisceau lumineux émis par les moyens d'émission est contenu dans un plan perpendiculaire au plan contenant les moyens d'émission et les moyens de réception, et l'axe de symétrie du disque du codeur.

Selon une autre particularité, les moyens de diffraction comprennent un réticule fixe par rapport au disque et comportent un diaphragme situé en vis-à-vis des moyens d'émission et une ou plusieurs ouvertures en vis-à-vis des récepteurs.

D'autres particularités et avantages de la présente invention apparaîtront plus clairement à la lecture de la description ci-après faite en référence aux dessins annexés dans lesquels :
- les figures 1A et 1B représentent chacune une vue de côté des différentes variantes de réalisation du dispositif de lecteur optique d'un codeur optique haute résolution, selon l'invention, où apparaissent les différentes dispositions du disque et des moyens de diffraction par rapport aux moyens d'émission et aux moyens de réception.
- les figures 2A et 2B représentent chacune une vue de côté des différentes variantes de réalisation de la forme des surfaces réfléchissantes.
- les figures 3A à 3D représentent chacune une vue de côté des différentes variantes de réalisation des moyens réfléchissants.
- la figure 4 représente une vue de coté d'une variante de réalisation du dispositif selon l'invention.
- la figure 5 représente une vue de dessous d'un disque de codeur optique avec les moyens de diffraction selon l'invention.

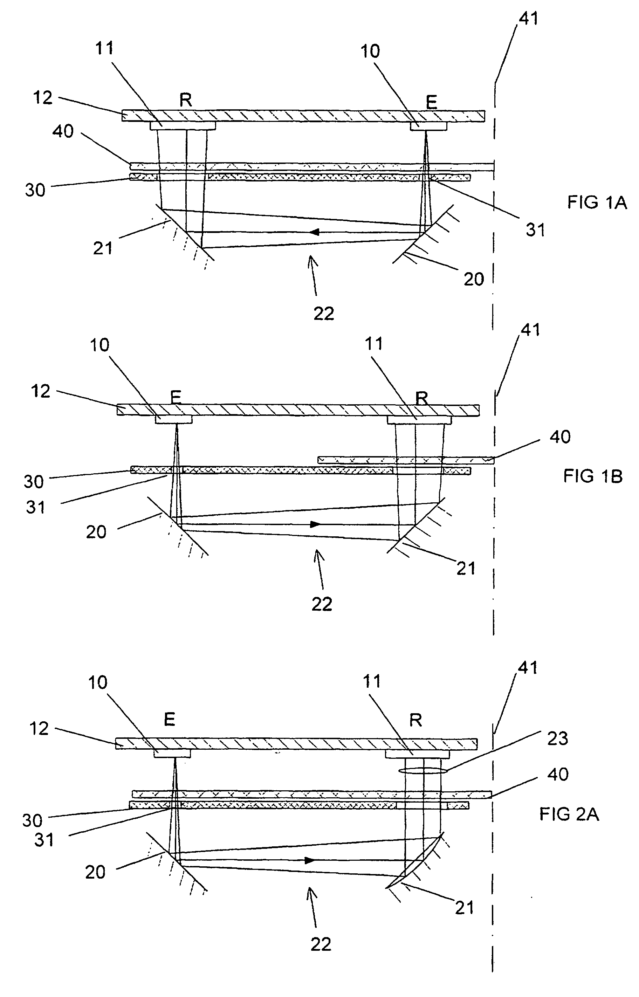

Les figures 1A et 1B représentent une vue de côté de deux variantes de réalisation de codeur optique, selon l'invention, où apparaissent les différentes dispositions du disque et des moyens de diffraction. Le dispositif optique du codeur optique, selon l'invention, est utilisé pour déterminer la position angulaire d'un disque (40) de codage par rapport à un autre objet (12) fixe. Pour ce faire, le dispositif optique comprend des éléments connus en soi, tels que des moyens (10) d'émission d'un faisceau (22) lumineux, des moyens (11) de réception de ce faisceau (22), des moyens réfléchissants (20, 21) et des moyens de diffraction (30) disposés sur le disque (40) de codage. Dans les figures 1A et 1B, les moyens (10) d'émission sont, par exemple, constitués d'un émetteur optique E, par exemple électroluminescent, et les moyens de réception (11) sont constitués par un nombre de récepteurs optiques R, par exemple, un photorécepteur correspondant au nombre de pistes du disque (40). Selon l'invention, l'émetteur optique E et le récepteur optique R sont disposés dans un même plan (12) perpendiculaire à l'axe (41) du disque (40) et alignés sur un rayon du disque (40) de codage. Avantageusement, l'émetteur E et le récepteur R sont alignés sur une demi-droite n'ayant pas de point d'intersection avec l'axe (41) de rotation du disque. La distance entre l'émetteur E et l'axe (41) de rotation du disque (40) peut indifféremment être supérieure (figure 1B) ou inférieure (figure 1A) à la distance existant entre le récepteur R et l'axe (41) de rotation du disque (40). Dans ces dispositions, le disque (40) est parallèle au plan (12) comprenant l'émetteur E et le récepteur R.

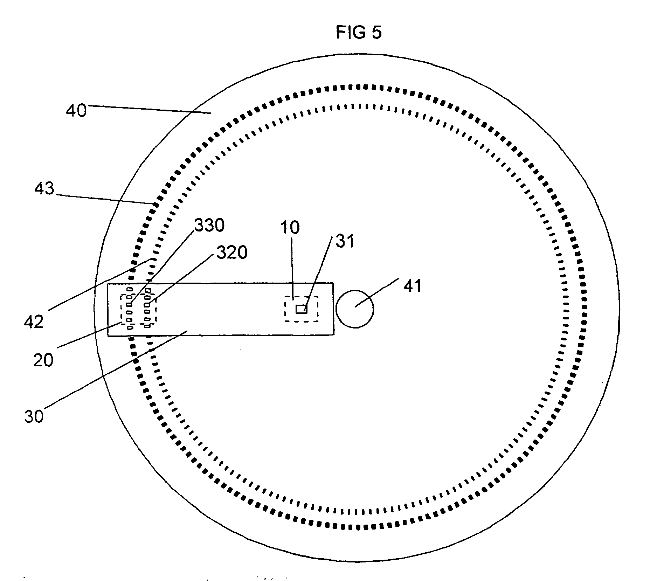

Les moyens (30) de diffraction sont constitués, par exemple d'un réticule (30), disposé fixe par rapport au disque (40) de codage et sur la face du disque (40) opposée au plan (12) comprenant l'émetteur E et le récepteur R. Le codeur optique, selon l'invention, comprend également des moyens (20, 21) réfléchissants permettant de dévier le faisceau (22) lumineux. La figure 5 permet de mieux comprendre la disposition des différents éléments du codeur selon l'invention. Le disque (40) comprend une pluralité de pistes, par exemple deux (42, 43), formées d'une succession de graduations de tailles différentes d'une piste à l'autre et/ou décalées angulairement. Chaque piste (42, 43) est formée d'une alternance de zone translucide et de zone opaque. Le réticule (30) en matériau opaque est fixe par rapport au disque (40) et est, par exemple, de forme rectangulaire et orienté parallèlement au rayon sur lequel sont alignés l'émetteur E et le récepteur R du codeur. En vis-à-vis de l'émetteur E, le réticule (30) comprend un diaphragme (31). Ce diaphragme (31) limite les réflexions parasites en périphérie du faisceau. Le diaphragme (31) contribue ainsi à améliorer la qualité de faisceau et par conséquent à augmenter la résolution du codeur selon l'invention. En vis-à-vis du récepteur R, le réticule (30) comprend une série d'ouvertures (320, 330) ayant le même pas que les graduations (42, 43) de chaque piste du codeur en vis-à-vis de laquelle les ouvertures du (320, 33) du réticule vont se trouver. Le réticule (30) peut comporter autant de série d'ouvertures (320, 330) que de pistes (42, 43) sur le disque (40) de codage.

Les moyens (20, 21) réfléchissants comprennent au moins deux surfaces (20, 21), disposées de sorte que le disque (40) soit situé entre le plan (12) et ces deux surfaces (20, 21) réfléchissantes. Une première surface (20) est située en vis-à-vis de l'émetteur E et forme un angle déterminé avec le plan (12). La deuxième surface (21) est disposée en vis-à-vis du récepteur R et des pistes (42, 43) de codage et est symétrique par rapport à un axe perpendiculaire au plan (12) comprenant l'émetteur E et le récepteur R. Ainsi, le faisceau (22) est dévié une première fois par la première surface (20) vers la deuxième surface (21) qui dévie une deuxième fois le faisceau (22) vers le récepteur R. L'angle entre la première surface (20) et le plan (12) est, par exemple égal à 45°. Les deux surfaces (20, 21) réfléchissantes peuvent être alignées sur une droite parallèle au plan (12) comprenant l'émetteur E et le récepteur R.

La particularité du faisceau (22) émis par les moyens (10) d'émission est qu'il est compris dans un plan, d'une part perpendiculaire au plan (12) comprenant les moyens (10) d'émission et les moyens (11) de réception, et d'autre part contenant l'axe (41) de rotation du disque (40). Avantageusement, le chemin optique de ce faisceau (22) traverse au moins une fois le disque (40) de codage et au moins une fois le réticule (30).

La figure 1B représente une variante de réalisation où le chemin optique traverse une seule fois le disque (40) et deux fois les moyens (30) de diffraction. A cet effet, le réticule (30) se prolonge au-delà de la surface formée par le disque jusqu'à ce qu'il coupe la portion de chemin optique existant entre l'émetteur E et la première surface (20) réfléchissante, l'émetteur étant lui-même installé à une distance de l'axe de rotation du disque (40) codeur, supérieure à son rayon. Ainsi, le chemin optique du faisceau (22) traverse une première fois le réticule (30) au travers du diaphragme (31), avant d'être dévié par la première surface (20), puis traverse une deuxième fois les ouvertures (320, 330) du réticule (30) puis les pistes (42, 43) du disque (40), après la déviation du faisceau (22) par la deuxième surface (21) vers le récepteur R.

La figure 1A représente une variante de réalisation où le chemin optique traverse deux fois le disque (40) et deux fois les moyens (30) de diffraction. A cet effet, les dimensions du disque (40) sont telles que toute la surface du disque est située entre le plan (12) comprenant l'émetteur E et le récepteur R et les surfaces (20, 21) réfléchissantes. Les dimensions du réticule (30) formant les moyens (30) de diffraction sont telles que le réticule (30) recouvre au moins une surface délimitée par, d'une part l'axe (41) de rotation du disque (40), et d'autre part la circonférence du disque (40). Le chemin optique du faisceau traverse donc une première fois le disque (40) par une piste blanche qui est transparente, et le diaphragme (31) du réticule (30), avant d'être dévié par la première surface (20), puis traverse une deuxième fois le réticule (30) par ses ouvertures (320, 330), puis les pistes (42, 43) du disque (40), après la déviation du faisceau (22) par la deuxième surface (21) vers le récepteur R. Ainsi, dans ces deux variantes de réalisation du codeur optique, selon l'invention, le faisceau est dévié une première fois par la première surface (20), cette déviation ayant pour but de diriger le faisceau sur la deuxième surface (21). Le faisceau (22) est alors dévié une deuxième fois par la deuxième surface (21) pour diriger le faisceau vers le récepteur. Comme décrit précédemment, le faisceau traverse au moins une fois le disque (40) et deux fois le réticule (30). Lors de la traversée du réticule (30), le faisceau (22) est diffracté. Cette diffraction est alors détectée et mesurée par le récepteur en fin de trajet optique, ce qui permet de déterminer, par exemple, la position angulaire du disque (40) par rapport au plan (12) comprenant l'émetteur E et le récepteur R.

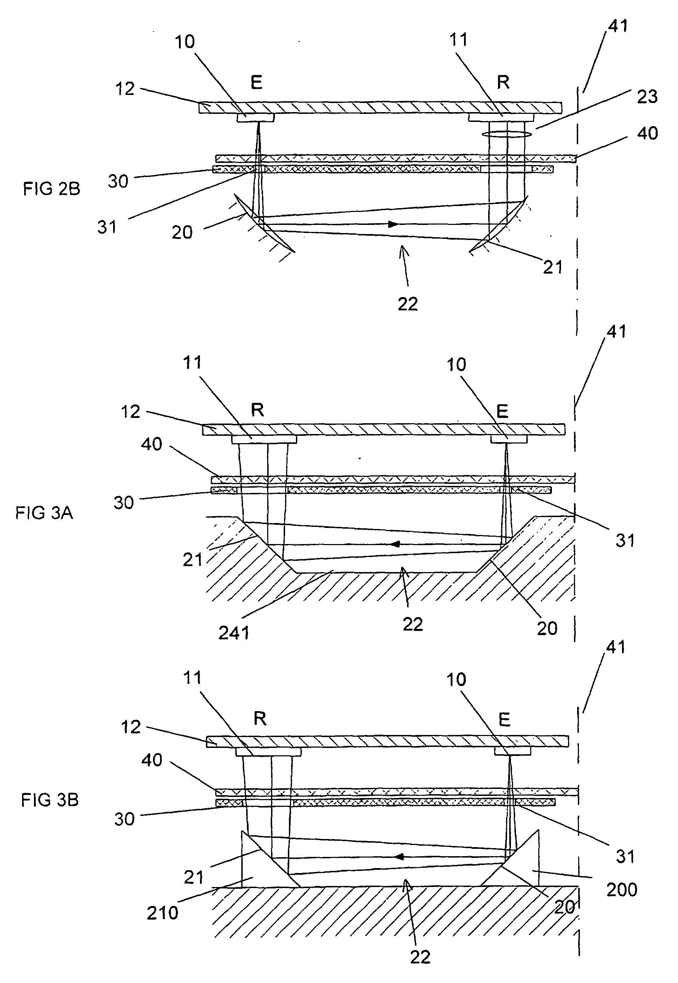

Les figures 2A et 2B représentent une vue de côté des différentes variantes de réalisation de la forme des surfaces réfléchissantes. Dans les figures 2A et 2B, les moyens (10) d'émission sont, par exemple, constitués d'un émetteur E et les moyens de réception (11) sont constitués d'un récepteur R. Afin de simplifier la lecture des figures 2A et 2B, le disque et les moyens de diffraction sont disposés selon la variante de la figure 1A, mais ils peuvent être disposés, par exemple selon la variante représentée à la figure 1B avec le disque (40) de codage qui ne coupe que le faisceau (22) provenant de la deuxième réflexion et allant vers le ou les récepteurs R. Comme décrit précédemment, le codeur optique, selon l'invention, comprend des moyens (20, 21) réfléchissants constitués de surfaces (20, 21) réfléchissantes. La qualité et la géométrie de ces surfaces (20, 21) déterminent la précision de la mesure de la position du disque (30) consécutive à la réception du faisceau sur les moyens (11) de réception. Ainsi, au moins une surface (20, 21) est, par exemple, non plane. A titre d'exemple, la figure 2B représente une variante de réalisation, où les première et deuxième surfaces (20, 21) sont concaves. Les dimensions de la concavité de ces deux surfaces permettent d'obtenir, dans une portion (23) de chemin optique du faisceau (22) située entre la deuxième surface (21) et le récepteur R, un faisceau de rayons parallèles. La figure 2A représente une variante de réalisation où seule la deuxième surface (21) est concave de sorte que les dimensions de la concavité permettent d'obtenir, comme précédemment, un faisceau de rayons parallèles sur le récepteur R. L'obtention d'un faisceau de rayons parallèles sur le récepteur R du codeur, selon l'invention permet une plus grande précision dans la mesure de la position angulaire du disque (40) par rapport au plan (12) comprenant les moyens (10) d'émission et les moyens (11) de réception.

Les figures 3A à 3D représentent une vue de côté des différentes variantes de réalisation des moyens réfléchissants. Afin de simplifier la lecture des figures 3A à 3C, le disque et les moyens de diffraction sont disposés selon la variante de la figure 1A, mais ils peuvent être disposés, par exemple, selon la variante représentée à la figures 1B avec le disque (40) de codage qui ne coupe que le faisceau (22) provenant de la deuxième réflexion et allant vers le ou les récepteurs R.

Pour la première variante de réalisation représentée figure 3A, les surfaces (20, 21) réfléchissantes sont réalisées dans un bloc (24) de matériau comprenant une cavité (241). Avantageusement, la section transversale de cette cavité (241) est constituée d'un trapèze dont les côtés opposés non parallèles entre eux constituent les première et deuxième surfaces (20, 21) réfléchissantes. Les surfaces (20, 21) réfléchissantes sont, par exemple, obtenues par polissage du matériau.

Pour la deuxième variante représentée figure 3B, les moyens (210, 200) réfléchissants sont constitués par deux prismes (210, 200) identiques dont les sections transversales sont des triangles rectangles isocèles. Le premier (200) respectivement le deuxième (210) prismes sont disposés en vis-à-vis de l'émetteur E respectivement du récepteur R de sorte que les faces extérieures des surfaces du premier (200) respectivement du deuxième (210) prismes, générées par les hypoténuses des triangles formant les sections transversales des prismes (200, 210) constituent les première (20) respectivement deuxième (21) surfaces réfléchissantes. L'indice de réfraction du matériau avec lequel sont réalisés les prismes (200, 210), est déterminé pour que les rayons incidents du faisceau (22) soient réfléchis lorsqu'ils frappent les surfaces (20, 21) réfléchissantes.

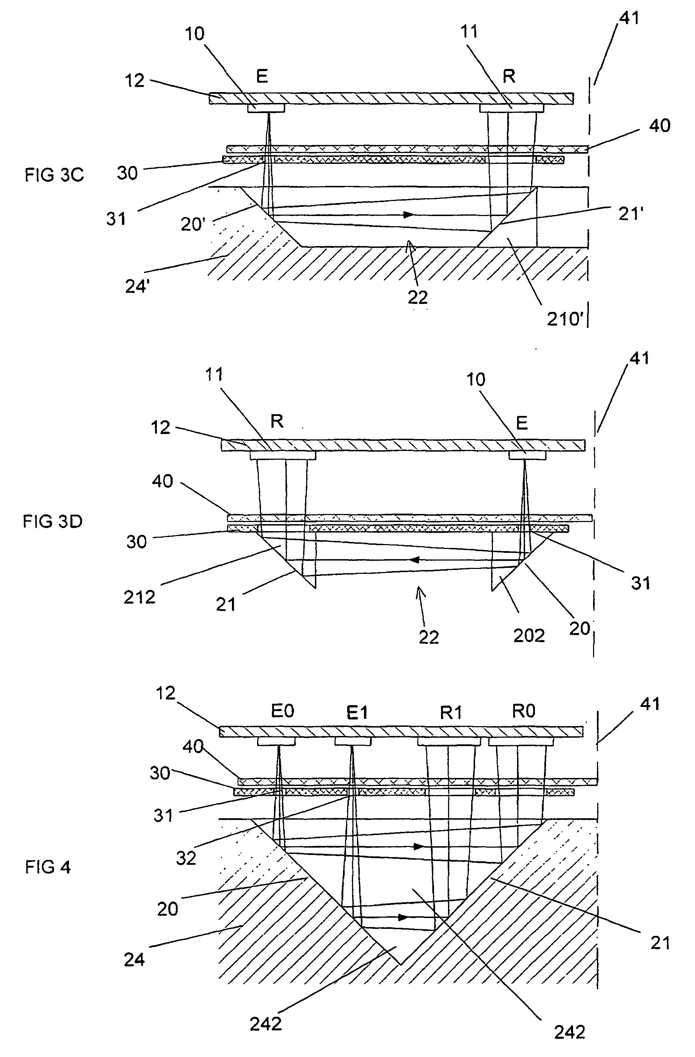

La troisième variante représentée figure 3C est en fait une combinaison des variantes représentées figures 3A et 3B. En effet, pour cette variante, la première surface (20') réfléchissante est, par exemple, réalisée dans un bloc (24) de matériau de façon analogue à la réalisation des surfaces (20, 21, figure 3A) réfléchissantes de la première variante. La deuxième surface (21') réfléchissante est obtenue par l'intermédiaire d'un prisme (210') identique aux prismes utilisés pour la deuxième variante et disposé de la même façon.

Pour la quatrième variante représentée figure 3D, les moyens réfléchissants sont constitués de prismes (202, 212) dont la géométrie est identique à la géométrie des prismes (200, 210, fig. 3B) de la deuxième variante représentée figure 3B. En revanche, la disposition de ces prismes (202, 212) est différente. Pour cette quatrième variante, la disposition des deux prismes est telle que les faces intérieures des surfaces du premier (202) respectivement du deuxième (212) prismes, générées par les hypoténuses des triangles formant les sections transversales des prismes (202, 212), constituent les première (20) respectivement deuxième (21) surfaces réfléchissantes. Pour cette quatrième variante, le faisceau (22) émis par l'émetteur E pénètre dans le premier prisme (202), avant d'être dévié vers le deuxième prisme (212) par la première surface (20) réfléchissante constituée par la face intérieure de la surface du premier prisme (202) générée par les hypoténuses des triangles formant la section transversale du premier prisme (202). Le faisceau (22) pénètre ensuite dans le deuxième prisme (212) avant d'être dévié vers le récepteur R, par la deuxième surface (21) réfléchissante constituée par la face intérieure de la surface du deuxième prisme (212) générée par les hypoténuses des triangles formant la section transversale du deuxième prisme (212).

La figure 4 représente une vue de côté d'une variante de réalisation du codeur optique selon l'invention. Afin de simplifier la lecture de cette figure, le disque et les moyens sont disposés selon la variante de la figure 1A, mais ils peuvent être disposés, par exemple, selon la variante représentée à la figure 1B avec le disque (40) de codage qui ne coupe que le faisceau (22) provenant de la deuxième réflexion et allant vers le ou les récepteurs R.

Dans cette variante de réalisation, la disposition des moyens constituant l'invention les uns par rapport aux autres, ne change pas, seule la forme de ces moyens fait l'objet de variations. Dans cette variante, les moyens d'émission comprennent une pluralité d'émetteurs, par exemple deux (E₀, E₁). Chaque émetteur E₀, respectivement E₁ est associé à un récepteur R₀, respectivement R₁ alignés radialement, de sorte que les faisceaux lumineux émis par l'émetteur E₀, respectivement l'émetteur E₁, sont successivement déviés par la première (20) et deuxième (21) surfaces réfléchissantes vers le récepteur R₀ respectivement le récepteur R₁. Les surfaces réfléchissantes (20, 21) sont, par exemple, réalisées dans un bloc (24) dans lequel est pratiquée une cavité (242) de forme déterminée. Avantageusement, la forme de la section transversale de la cavité (242) est un triangle rectangle isocèle dont les deux côtés, formant l'angle droit, constituent les première (20), respectivement deuxième (21) surfaces réfléchissantes de chaque émetteur E₀, et E₁, respectivement de chaque récepteur R₀, et R₁.

On conçoit que le codeur optique selon l'invention a une conception permettant une maintenance facilitée par le fait que les moyens d'émission et les moyens de réception sont disposés dans un même plan, ne nécessitant donc pas de démontage de l'ensemble du codeur.

Il est clair que d'autres modifications à la portée de l'homme du métier entrent dans le cadre de l'invention.

## Revendications

1. Dispositif de lecteur optique pour codeur optique haute résolution comprenant des moyens (10) d'émission d'un faisceau (22) lumineux, des moyens (11) de réception de ce faisceau, un disque (40) dont on cherche à déterminer la position angulaire, des moyens (21, 20) réfléchissants pour dévier, vers les moyens (11) de réception, le faisceau (22) émis par les moyens (10) d'émission, et des moyens (30) de diffraction du faisceau (22) disposés sur le d isque (40) d u codeur, les moyens (10) d'émission et les moyens (11) de réception du faisceau étant situés sur un même plan (12) parallèle au disque (40) du codeur, le disque (40) étant disposé entre, d'une part le plan (12) contenant les moyens (10) d'émission et les moyens (11) de réception et, d'autre part les moyens (20, 21) réfléchissants, **caractérisé en ce que** les moyens (30) de diffraction du faisceau (22) sont du type comprenant au moins une ouverture et disposés sur la face du disque (40) opposée au plan (12) contenant les moyens (10) d'émission et les moyens (11) de réception, les moyens (20, 21) réfléchissants comprenant a u moins deux surfaces (20, 21) réfléchissantes, chaque surface formant un angle déterminé avec le plan (12) contenant les moyens (10) d'émission et les moyens (11) de réception, les moyens (10) d'émission et les moyens (11) de réception étant alignés sur un rayon du disque (40).

2. Dispositif de lecteur optique selon la revendication 1, **caractérisé en ce que** l'angle entre les surfaces (20, 21) réfléchissantes et le plan (12) contenant les moyens (10) d'émission et les moyens (11) de réception est de 45°.

3. Dispositif de lecteur optique selon la revendication 1 ou 2, **caractérisé en ce que** les moyens (10) d'émission et les moyens (11) de réception sont disposés de sorte que le chemin optique du faisceau (22) lumineux traverse au moins une fois le disque (40) du codeur et au moins une fois les moyens (30) de diffraction.

4. Dispositif de lecteur optique selon l'une des revendications 1 à 3, **caractérisé en ce que** les surfaces (20, 21) réfléchissantes sont constituées de miroirs, et/ou de prismes, et/ou de surfaces polies de matériau.

5. Dispositif de lecteur optique selon l'une des revendications 1 à 4, **caractérisé en ce qu'**au moins une surface réfléchissante est de forme déterminée non plane, choisie préférentiellement parmi les formes concaves.

6. Dispositif de lecteur optique selon la revendication 5, **caractérisé en ce que** les deux surfaces réfléchissantes sont de forme non plane, déterminées pour que le faisceau réfléchi par la deuxième surface réfléchissante en direction du récepteur soit constitué de rayons lumineux parallèles.

7. Dispositif de lecteur optique selon l'une des revendications 1 à 6, **caractérisé en ce que** les moyens (10) d'émission du faisceau (22) lumineux comprennent au moins un émetteur optique E, chaque émetteur optique E étant associé à un récepteur optique R constituant les moyens (11) de réception du faisceau (22) lumineux.

8. Dispositif de lecteur optique selon l'une des revendications 1 à 7, **caractérisé en ce que** les moyens (10) d'émission et les moyens (11) de réception du faisceau (22) lumineux sont disposés de sorte qu'ils soient alignés sur une demi-droite, disjointe de l'axe (41) de symétrie du disque (40).

9. Dispositif de lecteur optique selon l'une des revendications 1 à 8, **caractérisé en ce que** le faisceau (22) lumineux émis par les moyens (10) d'émission est contenu dans un plan perpendiculaire au plan (12) contenant les moyens (10) d'émission, les moyens (11) de réception, et l'axe (41) de symétrie du disque (40) du codeur.

10. Dispositif de lecteur optique selon l'une des revendications 1 à 9, **caractérisé en ce que** les moyens (30) de diffraction comprennent un réticule fixe par rapport au disque (40) et comportent un diaphragme (31) situé en vis-à-vis des moyens (10) d'émission et une ou plusieurs ouvertures en vis-à-vis des récepteurs R.

## Patentansprüche

1. Optische Lesevorrichtung für einen hochauflösenden optischen Kodierer mit
einem Mittel (10) zum Abstrahlen eines Lichtbündels (22),
einem Mittel (11) zum Empfangen dieses Bündels,
einer Scheibe (40), deren Winkelstellung bestimmt werden soll,
einem Reflexionsmittel (21, 20) zum Umleiten des von dem Abstrahlmittel (10) abgestrahlten Bündels (22) zu dem Empfangsmittel (11), und
einem Mittel (30) zum Beugen des Bündels (22), das auf der Kodierscheibe (40) angeordnet ist,
wobei das Abstrahlmittel (10) und das Empfangsmittel (11) des Bündels in derselben Ebene (12) parallel zu der Kodierscheibe(40) gelegen sind und
die Scheibe (40) zwischen der das Abstrahlmittel (10) und das Empfangsmittel (11) enthaltenden Ebene (12) einerseits und dem Reflexionsmittel (20, 21) andererseits angeordnet ist;
**dadurch gekennzeichnet, dass**
das Mittel (30) zum Beugen des Bündels (22) von der Art ist, die zumindest eine Öffnung enthält, und auf der Fläche der Scheibe (40) angeordnet ist, die der das Abstrahlmittel (10) und das Empfangsmittel (11) enthaltenden Ebene (12) gegenüberliegt,
das Reflexionsmittel (20, 21) zumindest zwei reflektierende Oberflächen (20, 21) enthält, wobei jede Oberfläche einen vorbestimmten Winkel mit der das Abstrahlmittel (10) und das Empfangsmittel (11) enthaltenden Ebene (12) bildet, und
das Abstrahlmittel (10) und das Empfangsmittel (11) auf einem Radius der Scheibe (40) ausgerichtet sind.

2. Optische Lesevorrichtung nach Anspruch 1, **dadurch gekennzeichnet, dass** der Winkel zwischen den reflektierenden Oberflächen (20, 21) und der das Abstrahlmittel (10) und das Empfangsmittel (11) enthaltenden Ebene (12) 45° beträgt

3. Optische Lesevorrichtung nach Anspruch 1 oder 2, **dadurch gekennzeichnet, dass** das Abstrahlmittel (10) und das Empfangsmittel (11) so angeordnet sind, dass der optische Weg des Lichtbündels (22) zumindest einmal durch die Kodierscheibe (40) und zumindest einmal durch das Beugungsmittel (30) verläuft.

4. Optische Lesevorrichtung nach einem der Ansprüche 1 bis 3, **dadurch gekennzeichnet, dass** die reflektierenden Oberflächen (20, 21) aus Spiegeln und/oder Prismen und/oder polierten Materialoberflächen gebildet sind.

5. Optische Lesevorrichtung nach einem der Ansprüche 1 bis 4, **dadurch gekennzeichnet, dass** zumindest eine reflektierende Oberfläche eine vorbestimmte nicht ebene Form aufweist, die vorzugsweise aus konkaven Formen ausgewählt ist.

6. Optische Lesevorrichtung nach Anspruch 5, **dadurch gekennzeichnet, dass** die zwei reflektierenden Oberflächen nicht ebene Formen aufweisen, die so festgelegt sind, dass das von der zweiten reflektierenden Oberfläche in Richtung auf den Empfänger hin reflektierte Bündel aus parallelen Lichtstrahlen gebildet ist.

7. Optische Lesevorrichtung nach einem der Ansprüche 1 bis 6, **dadurch gekennzeichnet, dass** das Mittel (10) zum Abstrahlen des Lichtbündels (22) zumindest einen optischen Sender (E) enthält, wobei jeder optische Sender (E) einem optischen Empfänger (R) zugeordnet ist, der das Mittel (11) zum Empfangen des Lichtbündels (22) bildet.

8. Optische Lesevorrichtung nach einem der Ansprüche 1 bis 7, **dadurch gekennzeichnet, dass** das Abstrahlmittel (10) und das Empfangsmittel (11) des Lichtbündels (22) so angeordnet sind, dass sie auf einer Halbgerade ausgerichtet sind, die von der Symmetrieachse (41) der Scheibe (40) getrennt ist.

9. Optische Lesevorrichtung nach einem der Ansprüche 1 bis 8, **dadurch gekennzeichnet, dass** das von dem Abstrahlmittel (10) abgestrahlte Lichtbündel (22) in einer Ebene senkrecht zu der Ebene (12) enthalten ist, die das Abstrahlmittel (10), das Empfangsmittel (11) und die Symmetrieachse (41) der Kodierscheibe (40) enthält.

10. Optische Lesevorrichtung nach einem der Ansprüche 1 bis 9, **dadurch gekennzeichnet, dass** das Beugungsmittel (30) ein im Hinblick auf die Scheibe (40) festes Fadenkreuz enthält und ein Diaphragma (31), das dem Abstrahlmittel (10) gegenüberliegt, sowie eine oder mehrere Öffnungen gegenüber den Empfängern (R) aufweist.

## Claims

1. Optical reader device for a high-resolution optical encoder comprising means (10) for emitting a light beam (22), means (11) for receiving this beam, a disc (40), the angular position of which is to be determined, reflecting means (21, 20) for deflecting the beam (22) emitted by the emission means (10) towards the reception means (11) and means (30) for diffracting the beam (22), arranged on the disc (40) of the encoder, the emission means (10) and the reception means (11) being situated in the same plane (12) parallel to the disc (40) of the encoder, the disc (40) being arranged between the plane (12) containing the emission means (10) and the reception means (11) on the one hand and the reflecting means (20, 21) on the other hand, **characterised in that** the means (30) for diffracting the beam (22) are of the type comprising at least one opening and arranged on the face of the disc (40) opposite the plane (12) containing the emission means (10) and the reception means (11), the reflecting means (20, 21) comprising at least two reflecting surfaces (20, 21), each surface forming a given angle with the plane (12) containing the emission means (10) and the reception means (11), the emission means (10) and reception means (11) being aligned along a radius of the disc (40).

2. Optical reader device according to Claim 1, **characterised in that** the angle between the reflecting surfaces (20, 21) and the plane containing the emission means (10) and the reception means (11) is 45°.

3. Optical reader device according to Claim 1 or 2, **characterised in that** the emission means (10) and the reception means (11) are arranged such that the optical path of the light beam (22) crosses the disc (40) of the encoder at least once and the diffraction means (30) at least once.

4. Optical reader device according to one of Claims 1 to 3, **characterised in that** the reflecting surfaces (20, 21) are constituted by mirrors and/or prisms and/or polished surfaces of material.

5. Optical reader device according to one of Claims 1 to 4, **characterised in that** at least one reflecting surface is of a given non-planar shape, preferably selected from the concave shapes.

6. Optical reader device according to Claim 5, **characterised in that** the two reflecting surfaces are non-planar in shape, designed so that the beam reflected by the second reflecting surface in the direction of the receiver is constituted by parallel light beams.

7. Optical reader device according to one of Claims 1 to 6, **characterised in that** the means (10) for emitting the light beam (22) comprise at least one optical emitter E, each optical emitter E being associated with an optical receiver R constituting the means (11) for receiving the light beam (22).

8. Optical reader device according to one of Claims 1 to 7, **characterised in that** the means (10) for emitting and the means (11) for receiving the light beam (22) are arranged such that they are aligned along a half line having no common point with the axis of symmetry (41) of the disc (40).

9. Optical reader device according to one of Claims 1 to 8, **characterised in that** the light beam (22) emitted by the emission means (10) is contained in a plane perpendicular to the plane (12) containing the emission means (10), the reception means (11) and the axis of symmetry (41) of the disc (40) of the encoder.

10. Optical reader device according to one of Claims 1 to 9, **characterised in that** the diffraction means (30) comprise a reticle that is fixed relative to the disc (40) and comprise a diaphragm (31) located opposite the emission means (10) and one or more openings opposite the receivers R.
